# EUROPÄISCHE PATENTSCHRIFT

(11) **EP 3 278 855 B1**
(45) Veröffentlichungstag und Bekanntmachung des Hinweises auf die Patenterteilung: **30.09.2020**
(21) Anmeldenummer: 17184276.8
(22) Anmeldetag: 01.08.2017
(51) Int. Cl.: B01D 25/26, B01D 29/41, B01D 63/08

(54) **FILTERANLAGE**
FILTER ASSEMBLY
INSTALLATION DE FILTRE

(30) Priorität: 05.08.2016 DE 102016214516
(43) Veröffentlichungstag der Anmeldung: 07.02.2018
(73) Patentinhaber: Sager + Mack GmbH, 74532 Ilshofen - Eckartshausen (DE)
(72) Erfinder: Mack, Peter, 74532 Ilshofen-Eckartshausen (DE)
(74) Vertreter: Dr. Weitzel & Partner

(56) Entgegenhaltungen:
- WO-A1-2014/081433
- US-A- 4 707 258
- US-A- 5 240 605

## Beschreibung

Die Erfindung betrifft eine Filteranlage zum Filtrieren von Medien jeglicher Art, insbesondere von Flüssigkeiten. Eine solche Filteranlage lässt sich in jeglichen Bereichen anwenden. Im industriellen Bereich kommt die Anwendung für Wasser, Abwasser, Öle, Chemikalien in Betracht, und im Lebensmittelbereich für Säfte wie Fruchtsäfte.

Bekannte Filteranlagen umfassen eine Mehrzahl von Filterplatten, die aufeinandergestapelt sind. Zwischen zwei einander benachbarten Filterplatten befindet sich ein poröses flächiges ringförmiges Filterelement, im Allgemeinen aus einem Faserprodukt wie Zellulose. Das zu filtrierende Medium enthält Partikel, die heraus zu filtrieren sind, wie beispielweise Verunreinigungen eines Abwassers. Die Partikel werden von den Filterelementen zurückgehalten. Die Poren der Filterelemente setzen sich mehr und mehr zu, sodass die Filterelemente nach einer gewissen Zeit ausgetauscht werden müssen.

Ganz allgemein soll eine Filteranlage die folgenden Eigenschaften aufweisen:
- hoher Durchsatz
- hohe Trennschärfe
- lange Standzeit
- Filtration
- Absorption über angeschwemmtes Medium wie Kieselgur, Aktivkohle, Cellulose innerhalb des Schmutzfrachtvolumens

Bei bekannten Filteranlagen werden diese Anforderungen nicht oder nur unzureichend erreicht.

GB 2 149 315 A beschreibt eine Filtervorrichtung mit nur einer einzigen Filtrationsebene, im Gegensatz zur Erfindung, bei welcher ein Paket von Filterplatten vorgesehen ist.

Bei GB 2 149 315 A strömt das zu filtrierende Medium zentrifugal, d.h. vom Zentrum zum Umfang der Filterplatte. Bei der Erfindung gibt es hingegen Einlässe für das Unfiltrat am Umfang der einzelnen Filterplatte und einen Auslass im Zentrum. Es handelt sich somit um eine zentripetale Strömung.

Eine Vorrichtung gemäß GB 2 149 315 A vermag somit die der Erfindung zugrunde liegende Aufgabe nicht zu lösen.

DE 101 63 609 A1 zeigt eine Filtereinrichtung mit einzelnen Filterplatten, an deren Unterseiten keine Leitelemente vorhanden sind.

FR 2 203 664 A1 beschreibt ein Filtrationsgerät mit umlaufender Welle und umlaufenden Filterplatten, ganz im Gegensatz zur Erfindung.

US 4,707,258 offenbart eine Filteranlage mit einer Vielzahl gestapelter Scheibenfilterplatten.

Der Erfindung liegt die Aufgabe zugrunde, eine Filteranlage beziehungsweise Filterplatten hierfür zu schaffen, die derart gestaltet sind, dass sie die genannten Anforderungen erfüllen.

Diese Aufgabe wird durch die Merkmale des Anspruchs 1 gelöst.

Die Erfindung ist anhand der Zeichnung näher erläutert.

Darin ist im Einzelnen Folgendes dargestellt:
- Figur 1: zeigt eine Filterplatte in Draufsicht.
- Figur 2: zeigt die Filterplatte gemäß Figur 1 in einer Schnittdarstellung gemäß der Schnittlinie A - A.
- Figur 3: zeigt einen Ausschnitt aus Figur 2 in vergrößerter Darstellung.
- Figur 4: zeigt die Filterplatte gemäß Figur 1 in einer Teilansicht entlang der Schnittlinie.
- Figur 5: zeigt einen vergrößerten Ausschnitt aus dem Randbereich der Filterplatte.
- Figur 6: zeigt einen Ausschnitt aus einem anderen Randbereich der Filterplatte.

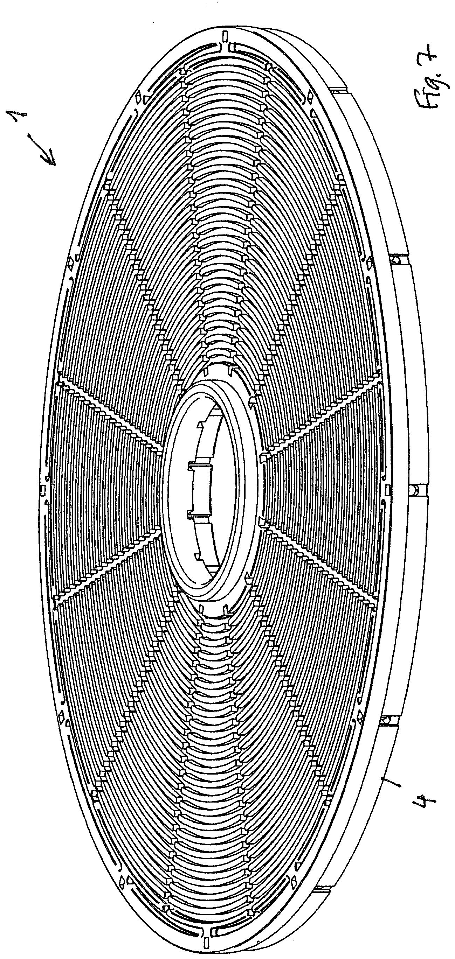

- Figur 7: zeigt eine Ansicht der Filterplatte mit Blick auf deren Oberseite.
- Figur 8: ist eine Draufsicht auf die Unterseite der Filterplatte.
- Figur 9: ist eine vergrößerte Darstellung eines Ausschnittes aus dem zentralen Bereich der Filterplatte.
- Figur 10: ist eine Schnittansicht der Filterplatte gemäß der Schnittlinie C-C.
- Figur 11: ist ein Ausschnitt gemäß der Schnittlinie D - D aus Figur 8.
- Figur 12: ist eine Schnittansicht eines vergrößerten Ausschnitts gemäß der Schnittlinie E - E in Figur 8.
- Figur 13: ist ein vergrößerter Ausschnitt aus dem Bereich V von Figur 10.
- Figur 14: ist eine 3D-Darstellung der Filterplatte gemäß Figur 8 in Draufsicht auf deren Unterseite.
- Figur 15: ist eine Darstellung einer Filteranlage in zusammengebautem Zustand.

Die in den Figuren gezeigte Filterplatte 1 ist kreisrund. Sie besteht aus Kunststoff und ist im Spritzgussverfahren hergestellt.

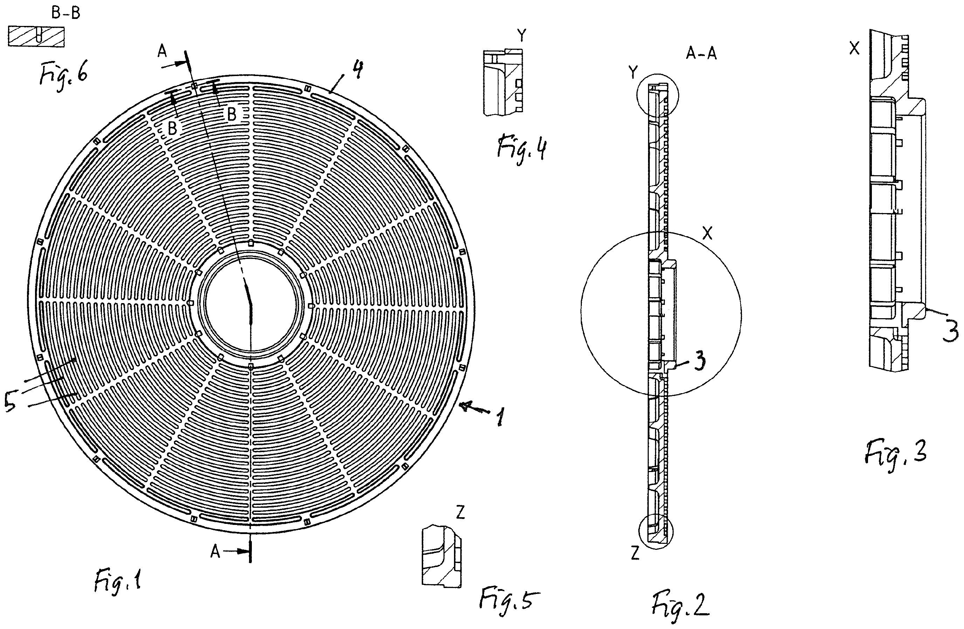

Wie man aus den Figuren 2, 3, 10 und 11 sieht, ist dem Randbereich der Bohrung eine Hülse 3 angeformt. Diese ragt im vorliegenden Falle über die beiden Seiten der Filterplatte 1 hinaus.

Dem Umfangsbereich der Filterplatte 1 ist ein Flansch 4 angeformt, der im vorliegenden Falle über beide Seiten der Filterplatte 1 hinausragt.

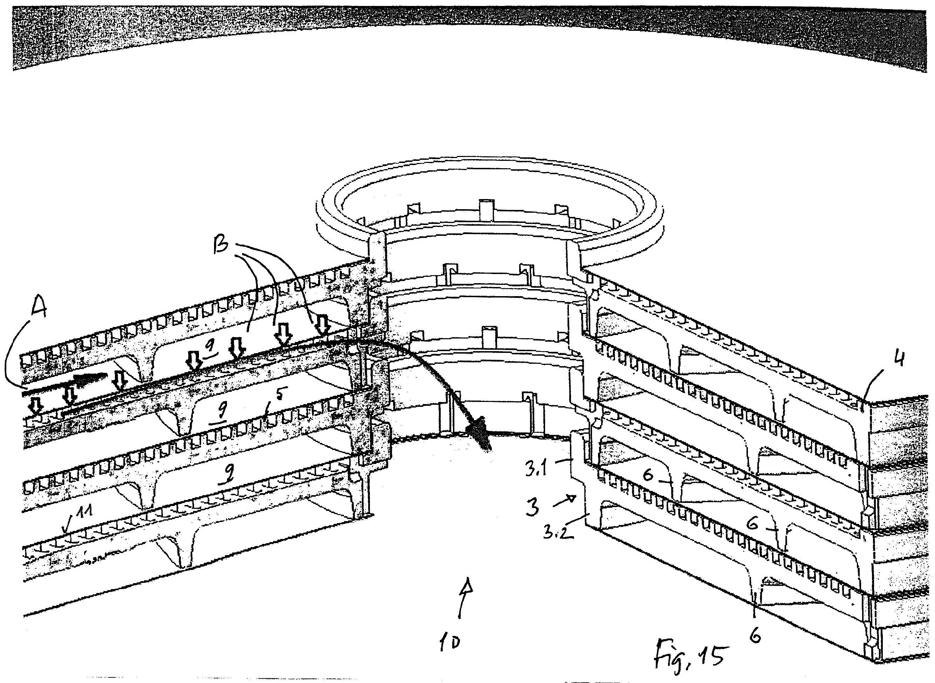

Der Oberseite der Filterplatte 1 sind konzentrische Rippen 5 angeformt, die zwischen sich Rillen bilden siehe Fig. 15. Die Rippen 5 haben keine geschlossene Kreisform, sondern sind unterbrochen, sodass Gruppen von Rippensegmenten gebildet werden - im vorliegenden Falle zwölf Rippensegmente. Zwischen einander benachbarten Rippensegmenten befindet sich ein Kanal, der sich radial zwischen der Hülse 3 und dem Flansch 4 erstreckt. In Figur 1 sieht man zwölf solcher Kanäle, die radial verlaufen.

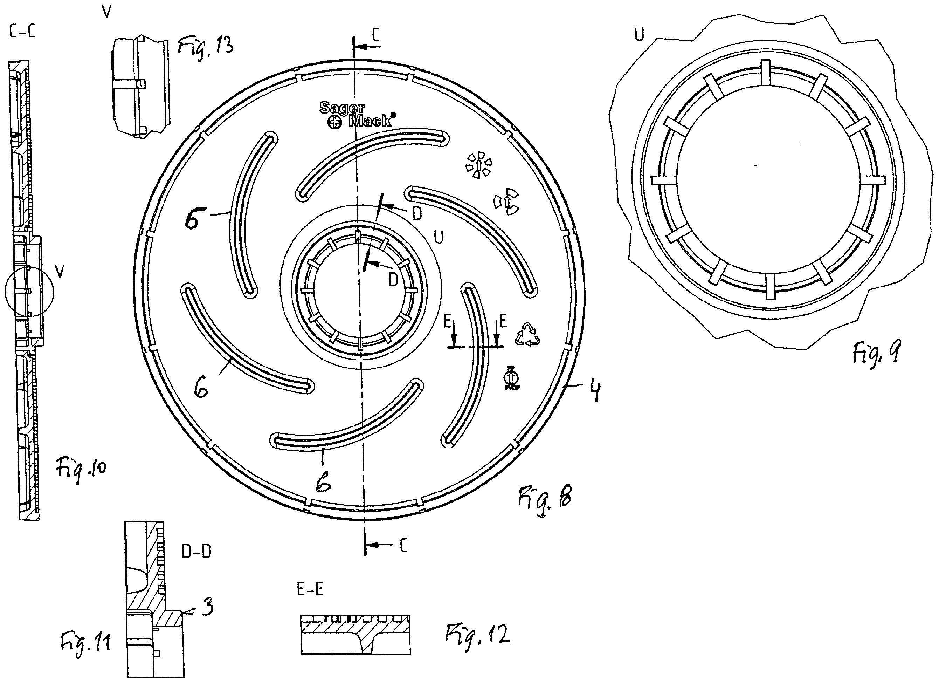

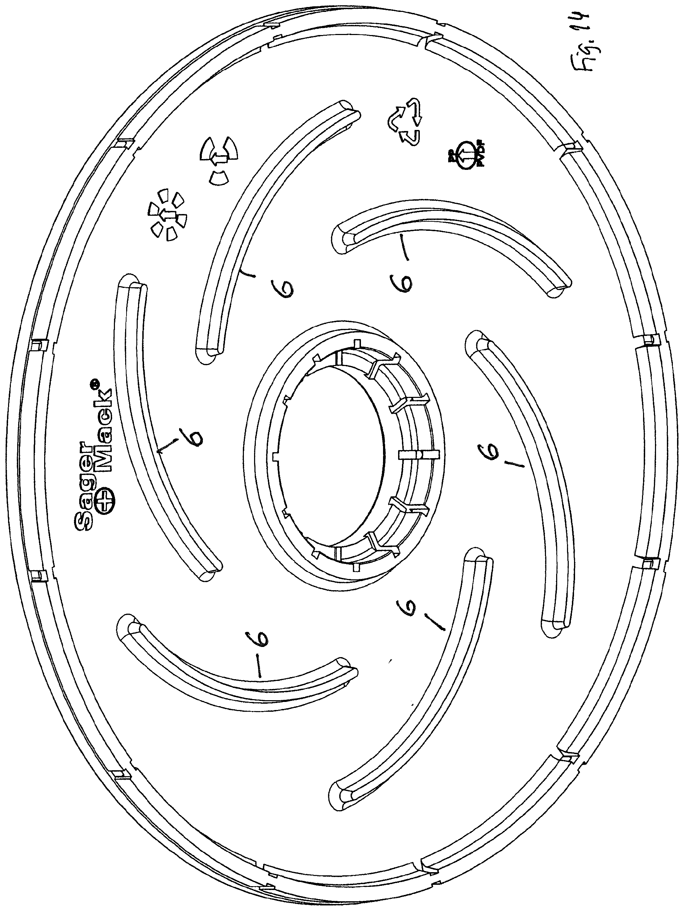

Die einzelne Filterplatte 1 weist im Bereich des Flansches 4 zwölf Eintrittsöffnungen zum Einführen von zu filtrierendem Medium auf. Das Medium tritt durch den Flansch 4 hindurch und gelangt zur Unterseite der Platte, die in den Figuren 8 bis 14 gezeigt ist. Figur 8 zeigt eine spiralförmige Ausprägung in Form von Pumpschaufeln, die an der Filterplatte 1 angebrachten Leitelemente 6. Die entscheidenden Elemente der Erfindung sind in den genannten Figuren zu sehen. Dabei handelt es sich um Leitelemente 6 wie diese in Figur 15 gekennzeichnet sind. Diese erstrecken sich zwischen dem Flansch 4 und der Hülse 3. Dabei können sie sich von der Hülse 3 bis zum Flansch 4 erstrecken, jedoch können sie auch kürzer sein, so wie hier dargestellt. Im vorliegenden Falle haben sie die Gestalt und sind angeordnet nach Art von Pumpenschaufeln. Die Funktion der Leitelemente 6 wird später noch erläutert werden.

Im Umfangsbereich befinden sich Einführöffnungen zum Einführen von zu filtrierendem Medium in den Hohlraum 9 unterhalb einer jeden Filterplatte 1. Siehe Figur 15. Der Hohlraum 9 ist gebildet durch Zusammenfügen zweier Filterplatten 1. Im zentralen Bereich befinden sich Abführöffnungen zum Abführen von Filtrat.

Die in Figur 15 dargestellte Filteranlage umfasst vier Filterplatten gemäß den vorausgegangenen Darstellungen. Die Filterplatten sind gestapelt und bilden somit ein Filterplattenpaket 10. Das Filterplattenpaket 10 steht fest; es gibt bei der erfindungsgemäßen Vorrichtung keine umlaufenden Teile. Das Paket umfasst z. B. 10 - 60 Filterplatten, ggf. auch mehr oder weniger.

Das Filterplattenpaket 10 hat eine zylindrische Form. Wie man sieht, ist aus dem Zylinder ein "Tortenstück" herausgeschnitten, sodass die Filterplatten im Querschnitt erscheinen.

Die einzelne Filterplatte 1 weist eine konzentrische Bohrung auf, umgeben von einer Hülse 3 - in der unteren Platte des Paketes herausgestellt. Hülse 3 ist abgekröpft, sodass sie zwei Abschnitte aufweist, einen oberen Abschnitt 3.1 und einen unteren Abschnitt 3.2. Der obere Abschnitt hat somit einen kleineren Durchmesser, als der untere Abschnitt. Aufgrund dieser Konfiguration lassen sich die einander benachbarten Hülsen ineinander schachteln. Dabei können die Hülsenabschnitte 3.1 und 3.2 derart bemessen sein, dass sie klemmend aneinander haften. Auch ist es denkbar, die Außenfläche des oberen Hülsenabschnittes 3.1 und die Innenfläche des unteren Hülsenabschnittes 3.2 derart zu gestalten, dass eine Schnappverbindung entsteht, zum Beispiel gebildet aus Rasten und Sicken.

Dem Umfangsbereich einer jeden Filterplatte 1 ist ein Flansch 4 angeformt. Dieser ragt nach unten und nach oben über die Filterplatte 1 hinaus.

Man erkennt ferner die eingangs genannten konzentrischen Rippen 5, die der Filterplatte 1 angeformt sind. Sie können kreisförmig sein. Sie können aber auch spiralig sein.

Man erkennt die wichtigen Leitelemente 6. Siehe auch Figur 15.

Jede Filterplatte ist auf ihrer Oberseite bedeckt von einem Filterelement 11. Dieses ist ringförmig. Es kann den Arbeitsbereich der Filterplatte 1 vollständig abdecken. Die innere Umfangslinie des ringförmigen Filterelementes 11 kann an den Flansch 4 anstoßen, oder sogar von diesem abgedeckt sein. Ebenso kann die innere Kante des Filterelementes 11 am unteren Hülsenabschnitt 3.2 einer Hülse 3 anstoßen, oder von der Hülse abgedeckt sein. Im Allgemeinen wird man das Filterelement an seinem radial inneren Bereich durch Hülsenabschnitt 3.2 einspannen, und an seinem äußeren Umfangsbereich durch Flansch 4.

Das zu filtrierende Medium nimmt durch das Filterplattenpaket 10 den folgenden Weg: Es gelangt zunächst durch die eingangs genannten Einführöffnungen, die sich im Umfangsbereich befinden, auf das Filterelement 11 - siehe die Pfeile B. Auf dem Filterelement 11 oder im Filterelement 11 werden unerwünschte Partikel zurückgehalten. Das Filtrat wandert weiter durch das Filterelement 11 hindurch und gelangt auf die Oberseite der Filterplatte 1. Dort wird es in der Vielzahl von Rillen zwischen den Rippen 5 aufgefangen. In den oben genannten Kanälen die sich zwischen einander benachbarten Gruppen von Rippensegmenten befinden, wird das Filtrat gesammelt und zu der zentralen Bohrung geleitet, von wo aus es abgeführt wird.

Die Leitelemente 6 spielen eine entscheidende Rolle. Sie sorgen für eine Verteilung des zu filtrierenden Mediums über die gesamte Arbeitsfläche des Filterelementes 11. Die Arbeitsfläche des Filterelementes 11 wird hierdurch weitgehend gleichmäßig beaufschlagt. Es wird somit vermieden, dass sich Teilströme des zu filtrierenden Mediums auf einzelne Bereiche des Filtermediums konzentrieren, und andere Bereiche nicht beaufschlagt werden. Durch Anwendung der Erfindung wird die gesamte Arbeitsfläche des Filterelementes 11 ausgenutzt und somit der Durchsatz erhöht.

Bei der in Figur 15 gezeigten Filteranlage setzen sich im Laufe der Zeit die Poren des Filterelementes mit Partikeln zu, sodass der Durchsatz der Anlage im Laufe der Zeit nachlässt. Dies bedeutet, dass die Filterelemente 11 nach einer gewissen Zeit gegen neue Filterelemente 11 ausgetauscht werden müssen.

### Bezugszeichen liste

- 1: Filterplatte
- 3: Hülse
- 3.1: oberer Hülsenabschnitt
- 3.2: unterer Hülsenabschnitt
- 4: Flansch
- 5: Rippen
- 6: Leitelemente
- 9: Hohlraum
- 10: Filterplattenpaket
- 11: Filterelement

## Patentansprüche

1. Filteranlage, umfassend
1.1 eine Mehrzahl von feststehenden Filterplatten (1), die aufeinander gestapelt sind;
1.2 zwischen zwei einander benachbarten Filterplatten (1) befindet sich ein poröses, flächiges, ringförmiges Filterelement;
1.3 die Filterplatten (1) weisen die folgenden Merkmale auf:
- sie sind Spritzgusselemente
- sie sind kreisrund
- eine konzentrische Bohrung
- die obere Fläche einer jeder Filterplatte (1) ist mit einem Filterelement (11) bedeckt
- zwei einander benachbarte Filterplatten (1) bilden miteinander einen Hohlraum (9)
- im Umfangsbereich befinden sich Eintrittsöffnungen zum Einführen von zu filtrierendem Medium in den Hohlraum (9)
- im Bohrungsbereich befinden sich Austrittsöffnungen zum Abführen von Filtrat
1.4 an der Unterseite der Filterplatten 1 sind Leitelemente (6) angeformt, die sich jeweils zwischen dem Umfangsbereich und dem Bohrungsbereich erstrecken und die Kontur von Pumpenschaufeln radialer Kreiselpumpen haben.

2. Filteranlage nach Anspruch 1, **dadurch gekennzeichnet, dass** wenigstens einige der Filterplatten (1) auf ihren den Leitelementen (6) gegenüberliegenden Seiten Kanäle aufweisen, die leitende Verbindungen zwischen dem Umfangsbereich und dem Bohrungsbereich bilden.

3. Filteranlage nach Anspruch 1 oder 2, **dadurch gekennzeichnet, dass** wenigstens einige der Filterplatten (1) auf ihren den Leitelementen (6) gegenüberliegenden Seiten konzentrische oder spiralförmige Rillen aufweisen.

## Claims

1. Filter assembly, comprising
1.1 a plurality of fixed filter plates (1) stacked on top of each other;
1.2 between two adjacent filter plates (1) there is a porous, flat, annular filter element;
1.3 the filter plates (1) have the following features:
- they are injection-molded elements
- they are circular
- a concentric borehole
- the upper surface of each filter plate (1) is covered with a filter element (11)
- two adjacent filter plates (1) together form a cavity (9)
- in the circumferential area there are inlet openings for introducing the medium to be filtered into the cavity (9)
- in the bore area there are outlet openings for discharging filtrate
1.4 on the underside of the filter plates 1, guide elements (6) are integrally formed, each extending between the circumferential area and the bore area and having the contour of pump blades of radial centrifugal pumps.

2. Filter assembly according to claim 1, **characterized in that** at least some of the filter plates (1) have channels on their sides opposite the guide elements (6), which form conductive connections between the circumferential area and the bore area.

3. Filter assembly according to claim 1 or 2, **characterized in that** at least some of the filter plates (1) have concentric or spiral grooves on their sides opposite the guide elements (6).

## Revendications

1. Installation de filtration, comprenant
1.1 une pluralité de plaques filtrantes fixes (1) qui sont empilées les unes sur les autres ;
1.2 un élément filtrant annulaire, plat et poreux se trouve un entre deux plaques filtrantes (1) adjacentes ;
1.3 les plaques filtrantes (1) présentent les caractéristiques suivantes :
- ce sont des éléments moulés par injection
- elles sont circulaires
- elles présentent un alésage concentrique
- la surface supérieure de chaque plaque filtrante (1) est recouverte d'un élément filtrant (11)
- deux plaques filtrantes (1) adjacentes forment entre elles une cavité (9)
- des ouvertures d'entrée pour l'introduction d'un milieu à filtrer dans la cavité (9) se trouvent dans la zone périphérique,
- des ouvertures de sortie pour évacuer le filtrat se trouvent dans la zone d'alésage,
1.4 des éléments de guidage (6) sont formés sur la face inférieure des plaques filtrantes (1), qui s'étendent chacun entre la zone périphérique et la zone d'alésage et présentent le contour d'aubes de pompage de pompes centrifuges radiales.

2. Installation de filtration selon la revendication 1, **caractérisée en ce qu'**au moins certaines des plaques filtrantes (1) présentent sur leurs faces opposées aux éléments de guidage (6) des canaux qui forment des liaisons de guidage entre la zone périphérique et la zone d'alésage.

3. Installation de filtration selon la revendication 1 ou 2, **caractérisée en ce qu'**au moins certaines des plaques filtrantes (1) présentent sur leurs faces opposées aux éléments de guidage (6) des rainures concentriques ou en spirale.
